# EUROPÄISCHE PATENTSCHRIFT

(11) **EP 3 954 742 B1**
(45) Veröffentlichungstag und Bekanntmachung des Hinweises auf die Patenterteilung: **23.07.2025**
(21) Anmeldenummer: 20190197.2
(22) Anmeldetag: 10.08.2020
(51) Int. Cl.: C08G 77/12, C09D 5/02

(54) **LACKZUBEREITUNG IN AEROSOLFORM**
LAQUER COMPOSITION IN AEROSOL FORM
PRÉPARATION DE LA PEINDRE EN AÉROSOL

(43) Veröffentlichungstag der Anmeldung: 16.02.2022
(73) Patentinhaber: TMC GmbH, 47198 Duisburg (DE)
(72) Erfinder: KOTHER, Frank, 47198 Duisburg (DE)
(74) Vertreter: Fabry, Bernd

(56) Entgegenhaltungen:
- EP-A1- 2 182 020
- WO-A1-2018/001889
- EVONIK: "Simply Indestructible! The VESTANAT EP-M Family for outstanding scratch and chemical resistance", 1 June 2020 (2020-06-01), XP055766065, Retrieved from the Internet <URL:https://crosslinkers.evonik.com/product/crosslinkers/downloads/vestanat%20ep-m%20family%20for%20outstanding%20scratch%20and%20chemical%20resistance_low_12.03.2018.pdf> [retrieved on 20210118]
- EVONIK INDUSTRIES AG: "Additives | Crosslinkers | Resin Components | Resins Smart Formulating Journal", 1 March 2014 (2014-03-01), XP055766075, Retrieved from the Internet <URL:https://fdocuments.in/document/smart-formulating-journal-coatings-products-and-solutions-for-paint-components.html> [retrieved on 20210118]
- EVONIK INDUSTRIES AG: "Simply Indestructible! The VESTANAT EP-M family for outstanding scratch resistance", 1 July 2015 (2015-07-01), XP055766090, Retrieved from the Internet <URL:https://docplayer.net/90108451-Simply-indestructible-the-vestanat-ep-m-family-for-outstanding-scratch-resistance.html> [retrieved on 20210118]

## Beschreibung

### Gebiet der Erfindung

Die Erfindung befindet sich auf dem Gebiet der Lacke und Farben und betrifft eine sprühbare 1-Komponenten Lackzubereitung.

### Technologischer Hintergrund

Lack ist der Oberbegriff für flüssige oder auch pulverförmige Beschichtungsstoffe, die dünn auf Gegenstände aufgetragen und durch chemische oder physikalische Vorgänge (zum Beispiel Verdampfen des Lösungsmittels) zu einem durchgehenden, festen Film aufgebaut werden. Ein Lack besteht aus flüchtigen Lösemitteln und nichtflüchtigen Bestandteilen. Das Lösemittel (der flüchtige Bestandteil) verdunstet während des Trocknungsprozesses, die nichtflüchtigen Bestandteile haften dabei als glatter Film auf dem lackierten Objekt. Die nicht flüchtigen Komponenten sind Bindemittel, Pigmente, Öle, Harze, Füllstoffe und Additive. Das Bindemittel sorgt für eine gute, gleichförmige Suspension mit Pigmenten und Lösemittel im Lack, ist für einen optimalen Trocknungsprozess (keine Blasenbildung) und für den Glanz nach der Trocknung verantwortlich.

Lacke werden in Ein- (1K)- und Zwei-Komponenten (2K) Systeme unterteilt. Im Gegensatz zum 1K-Lack besteht ein 2K-Lack aus den beiden Komponenten "Stammlack" und "Härter", die erst vor der eigentlichen Lackierarbeit zum Lack gemischt werden. 2K-Lack ist besonders robust. Seine besondere Widerstandsfähigkeit gewinnt er aufgrund einer chemischen Reaktion beider Komponenten.

Im Hausgebrauch trägt man den Lack mit einem Pinsel, die Acrylharz-Dispersion für eine Wandfarbe mit einem Roller auf. Die häufigsten Auftragungsarten in der Lackindustrie sind jedoch Sprühen und Spritzen. Zum Aufsprühen werden Druckzerstäuber benutzt, die den Lack mittels eines Kompressors im Niederdruck- (0,5-0,7 bar), Hochdruck- (1-8 bar) oder Airless-Verfahren (60-250 bar) auftragen. Sprühfähige Systeme stellen jedoch in der Regel 1K-Lacke dar, die wie beschrieben eine geringere Härte als 2K-Systeme besitzen.

### Relevanter Stand der Technik

SiH funktionelle Polysiloxane sind aus dem Stand der Technik als Lackadditive bekannt und stellen insbesondere Verkaufsprodukte der Firma Evonik dar. Beispielhaft sei auf folgende Druckschriften verwiesen:
EP 2176319 B1 und EP 2159248 B1 betreffen beide Verfahren zur Herstellung verzweigter SiH-funktioneller Siloxane, bei dem ein Gemisch aus einem oder mehreren niedermolekularen SiH-funktionellen Siloxanen, einem oder mehreren niedermolekularen SiH-freien Siloxanen und einem oder mehreren Trialkoxysilanen unter Zugabe von Wasser und in Gegenwart mindestens eines Broenstedsäure-Katalysators umgewandelt wird, wobei die Reaktion in einem Verfahrensschritt durchgeführt wird.

Gegenstand der WO 2011 088937 A1 sind Polysiloxane mit quaternären Ammoniumgruppen und deren Verwendung als Pflegewirkstoffe in Formulierungen zur Pflege und Reinigung von Haut und Haaren, beispielsweise als Konditionierungsmittel.

### Aufgabe der Erfindung

Eine erste Aufgabe der vorliegenden Erfindung hat daher darin bestanden, eine sprühbare Lackzubereitung zur Verfügung zu stellen, welche einen homogenen, schnell härtenden und schnell trocknenden Film ergibt.

Eine zweite Aufgabe ist darin zu sehen, eine entsprechende Lackzubereitung zu entwickeln, die die typischen Komponenten einer 2K-Formulierung enthält, selbst aber ein 1K-System darstellt.

### Beschreibung der Erfindung

Ein erster Gegenstand der Erfindung betrifft eine Lackzubereitung in Aerosolform, enthaltend oder bestehend aus
(a) mindestens einem SiH-funktionalisierten Polysiloxan,
(b) einem Lösemittel,
(c) einem Treibgas und gegebenenfalls
(d) einem Stammlack auf Basis eines selbstvernetzenden Polymers,

Überraschenderweise wurde gefunden, dass SiH-funktionelle Polysiloxane, die normalerweise in Lackzubereitungen lediglich als Vernetzungsmittel Einsatz finden, in den erfindungsgemäßen Zubereitungen als alleinige feuchtigkeitshärtende Bindemittel wirken. Auf diese Weise lässt sich auch ohne den zwingenden Zusatz von selbstvernetzenden Polymeren wie PU-Harzen und dergleichen eine 1K-Lackzubereitung herstellen, die die Kennzeichen und das Leistungsvermögen eines 2K-Systems aufweist und sich problemlos in Druckcontainer abfüllen und mit Treibgas als Aerosol versprühen lässt. Dabei können als Komponente (b) sowohl Systeme eingesetzt werden, die Methanol als auch Ethanol abspalten.

### SiH-funktionalisierte Polysiloxane

Wesentlicher Bestandteil der erfindungsgemäßen Härtungskomponenten sind die SiH-funktionellen Polysiloxane (Komponente a), die für sich genommen Produkte des Stands der Technik darstellen. Dabei handelt es sich um Polymere mit O-Si-O-Monomeren, bei denen die verbliebenen Valenzen mit unterschiedlichsten Substituenten gesättigt sein können; vorzugsweise handelt es sich wenigstens teilweise dabei um Methyl- oder Ethylgruppen. Beispiele für besonders geeignete Typen wurden bereits genannt. Auf die drei Schriften wird im Umfang, wie diese die Struktur der Polysiloxane beschreiben, ausdrücklich Bezug genommen.

In einer ersten bevorzugten Ausführungsform folgen die SiH-funktionellen Polysiloxane der Formel (I) 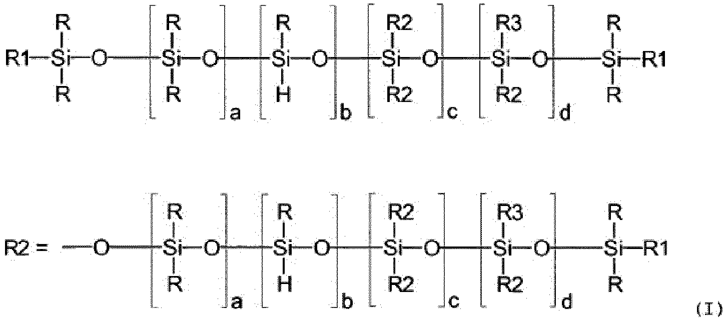 in welcher
- a: jeweils für 0 oder eine Zahl von 1 bis 500, vorzugsweise von 5 bis 300 und insbesondere von 10 bis 200 steht;
- b: jeweils für 0 oder eine Zahl von 1 bis 60, vorzugsweise von 2 bis 30 und insbesondere 5 bis 15 steht;
- c: jeweils für eine Zahl von 1 bis 10, vorzugsweise von 2 bis 5 steht;
- d: jeweils für 0 oder eine Zahl von 1 bis 10, vorzugsweise von 2 bis 5 steht;
- R: jeweils für einen linearen oder verzweigten, aliphatischen, cycloaliphatischen oder aromatischen Kohlenwasserstoffrest mit 1 bis 20 Kohlenstoffatomen, vorzugsweise für einen Methylrest steht;
- R1: jeweils für Wasserstoff oder R steht; und
- R3: jeweils für R, Wasserstoff oder einen gegebenenfalls mit Heteroatomen substituierten Alkyl-, Alkenyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest, vorzugsweise für einen Methyl-, Chlorpropyl-, Vinyl- oder einen Methacryloxypropyl-Rest steht;
mit den Maßgaben, dass
(i) wenn b = 0 ist R1 = H ist
(ii) die mittlere Anzahl der T- und Q-Einheiten pro Molekül jeweils nicht größer als 20, ,
(iii) die mittlere Anzahl der D-Einheiten pro Molekül nicht größerer als 2000 und
(iv) die mittlere Anzahl der D^{H}-Einheiten pro Molekül nicht größer als 100 ist.

Weiterhin bevorzugt ist, dass
- die mittlere Anzahl der T- und Q-Einheiten in Formel (I) pro Molekül jeweils nicht größer als 10, bevorzugt nicht größer als 5 und/oder
- die mittlere Anzahl der D-Einheiten pro Molekül nicht größerer als 1000 und bevorzugt nicht größer als 500 und/oder
- die mittlere Anzahl der D^{H}-Einheiten pro Molekül nicht größer als 60 ist.

Alternativ bevorzugt sind SiH-funktionellen Polysiloxane der Formel (II), 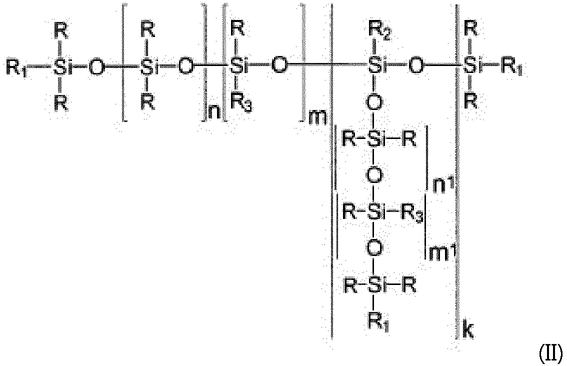 in welcher
- n und n¹: unabhängig voneinander für 0 oder Zahlen von 10 bis 200, bevorzugt 15 bis 100 stehen;
- (n+n¹): für eine Zahl kleiner 500, vorzugsweise für eine Zahl kleiner 200, und bevorzugt für eine Zahl von 10 bis 100 steht;
- m und m¹: unabhängig voneinander für 0 oder Zahlen von 0,1 bis 30, bevorzugt für eine Zahl von 0,1 bis 25 stehen;
- (m+m¹): für eine Zahl kleiner 60, vorzugsweise für eine Zahl kleiner 30, bevorzugt für eine Zahl von 1 bis 25 steht;
- k: für eine Zahl von 1 bis 10, vorzugsweise von 1 bis 5, steht;
- R: jeweils für einen linearen oder verzweigten, aliphatischen, cycloaliphatischen oder aromatischen Kohlenwasserstoffrest mit 1 bis 20 Kohlenstoffatomen, vorzugsweise für einen Methylrest steht;
- R₁: jeweils für R oder Wasserstoff steht;
- R₂: jeweils für R, Wasserstoff oder einen gegebenenfalls mit Heteroatomen substituierten Alkyl-, Alkenyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest, vorzugsweise für einen Methyl-, Chlorpropyl-, Vinyl- oder einen Methacryloxypropyl-Rest steht;
- R₃: jeweils für R oder Wasserstoff steht;
mit der Maßgabe, dass mindestens einer der Reste R₁, R₂ oder R₃ Wasserstoff darstellt.

Besonders bevorzugt sind die Polysiloxane der Formel (II), bei denen die Reste R, R₁, R₂ und R₃ Methylreste darstellen, mit der Maßgabe, dass jedoch einer dieser Reste für Wasserstoff steht.

Besonders bevorzugte Polysiloxane sind unter der Bezeichnung Vestanat^{®} (EVONIK) erhältlich. Besonders bevorzugt sind dabei die Typen EP-MF wie beispielsweise EP-MF 201 und 202.

### Lösungsmittel und weitere Additive

Die Lackzubereitungen können neben Lösungsmitteln (z.B. Dipropylenglycoldimethylether) noch weitere Additive aufweisen wie beispielsweise Verlaufsmittel (z.B. Polydimethylsiloxane) und Siliconentschäumer. Die Lackzubereitungen können die Additive beispielsweise in folgenden Mengen enthalten:
(i) 0 bis 10 Gew.-%, vorzugsweise 4 bis 6 Gew.-% Lösungsmittel;
(ii) 0 bis 1 Gew.-%, vorzugsweise 0,1 bis 0,2 Gew.-% Verlaufsmittel und
(iii) 0 bis 1 Gew.-%, vorzugsweise 0,2 bis 0,5 Gew.-% Siliconentschäumer Jeweils bezogen auf die Gesamtzubereitung.

### Treibmittel

Als Treibmittel kommen vor allem Propan, Butan und Dimethylether in Betracht. Dabei kann das Volumenverhältnis für die Summe der Komponenten (a+d) und das Treibmittel im Bereich von etwa 1:1 bis etwa 1:5, vorzugsweise etwa 1:2 bis 1:3 liegen.

### Stammlacke

Die Auswahl des Stammlacks (Komponente d) ist optional und wenig kritisch. Sie richtet sich nach der gewünschten Anwendung. In Betracht kommen insbesondere selbstvernetzende Polymere wie Acrylharze, Epoxidharze und insbesondere Polyurethane sowie deren Mischungen.

Dispersionslacke (Acryl- oder Wasserlacke) bestehen aus mit Wasser verdünnbaren Kunststoffdispersionen auf der Basis von polymerisierten Acrylsäureestern. Der Anteil an organischen Lösemitteln mit bis zu zehn Prozent ist sehr gering. Dispersionslacke sind zur Beschichtung vielfältiger Oberflächen im Innen- und Außenbereich geeignet.

Epoxidharzlacke bestehen häufig aus 2-Komponenten (2K)-Systemen, die vor der Lackierung vermischt werden. Der Lack muss nach Vermischung der Komponenten schnell aufgetragen werden, da die Anwendungsdauer ("Topfzeit") kurz ist. Epoxidharze sind Polyaddukte aus Epichlorhydrin mit Bisphenol A. Diese werden mit einem Härter vernetzt. Bei Raumtemperatur liegen die Härtungszeiten um zwölf Stunden, bei 120 °C um 30 Minuten. In Kombination mit Aminoharzen können Epoxidharze auch als Einbrennlacke genutzt werden. Bei diesem Verfahren besteht das Bindemittel aus nur einer Komponente. Hierbei werden Temperaturen um 160 bis 200 °C angewendet.

Ein- oder Mehrkomponentenlacke (Reaktionslacke) bestehen aus einer oder mehreren Komponenten, die nach dem Auftragen mit der Luft oder nach deren Mischung miteinander reagieren. Hierzu gehören Polyurethan-(PUR)-Lacke. Wegen ihrer hohen Beständigkeit werden sie im gewerblichen Bereich zur Versiegelung von Parkettfußböden und Möbeln verwendet.

Das Einsatzverhältnis zwischen Stammlack und Polysiloxan kann in weitem Maße variieren. Typische Volumenverhältnisse sind 1:1 bis 1:10, vorzugsweise 1:3 bis 1:8 und insbesondere 1:4 bis 1:5.

Ein weiterer Gegenstand der Erfindung betrifft ferner ein Verfahren zur Herstellung einer sprühfähigen 1K-Lackzubereitung, umfassend die Schritte:
(a1) Bereitstellen der Lack und der Härtungskomponente wie oben beschrieben;
(a2) Befüllen eines Druckcontainers mit Treibgas; und
(a3) Aufdrücken der Mischung aus Schritt (a1) auf den befüllten Druckcontainer aus Schritt (a2)
   oder
(b1) Bereitstellen der Lack und der Härtungskomponente wie oben beschrieben;
(b2) Befüllen eines Druckcontainers mit der Mischung aus Schritt (b1) ; und
(b3) Aufdrücken des Treibgases auf den befüllten Druckcontainer aus Schritt (b2).
Mit anderen Worten: Entweder legt man die Mischung aus den beiden Komponenten (a) und (b) im Druckcontainer vor und presst das Treibmittel auf oder umgekehrt. Grundsätzlich ist es auch möglich anstelle der Druckcontainer mechanische Pump- und Zerstäubersysteme einzusetzen.

### Gewerbliche Anwendbarkeit

Ein weiterer Gegenstand der Erfindung betrifft einen Druckcontainer enthaltend die Lackzubereitung wie oben beschrieben. Dieser weist typisch bei 50 °C einen Druck von etwa 1,1 bis etwa 3,5 bar und vorzugsweise von etwa 2,5 bis etwa 3 bar auf.

Ein letzter Gegenstand der Erfindung betrifft Verwendung der Lackzubereitung wie beschrieben als sprühfähiges 1K-System zum Auftrag auf feste Oberflächen.

### BEISPIELE

### Beispiel 1

### 1K-Lackaerosolformulierung

Eine Mischung aus einem herkömmlichen Polyurethan und Acrylharz für Lackanwendungen wurde mit der Härtungskomponente vermischt. Ein Druckcontainer wurde mit 300 ml Propan befüllt und dann 100 ml der Mischung aus Lack- und Härtungskomponente aufgedrückt. Bei 50 °C betrug der Druck im Container ca. 3 bar. Die Zusammensetzung der Lackzubereitung ist in der folgenden Tabelle 1 wiedergegeben:

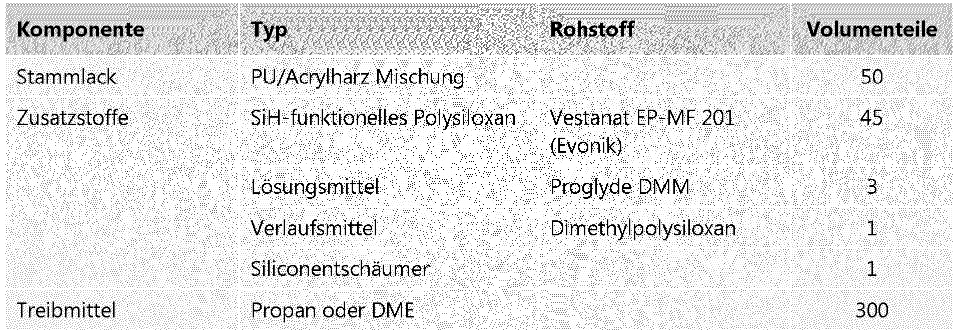

Das 1K-System bildet eine stabile Mischung, die auf eine glatten Oberfläche gesprüht einen klaren, homogenen Film mit einer König-Härte von mehr als 120 liefert und innerhalb von 1 Stunde staubtrocken ist.

### Vergleichsbeispiel V1

### 1K-Lackaerosolformulierung

Ein herkömmliches Acrylharz für Lackanwendungen wurde mit der Härtungskomponente vermischt. Ein Druckcontainer wurde mit 300 ml Propan befüllt und dann 100 ml der Mischung aus Lack- und Härtungskomponente aufgedrückt. Bei 50 °C betrug der Druck im Container ca. 3 bar. Die Zusammensetzung der Lackzubereitung ist in der folgenden Tabelle 1 wiedergegeben:

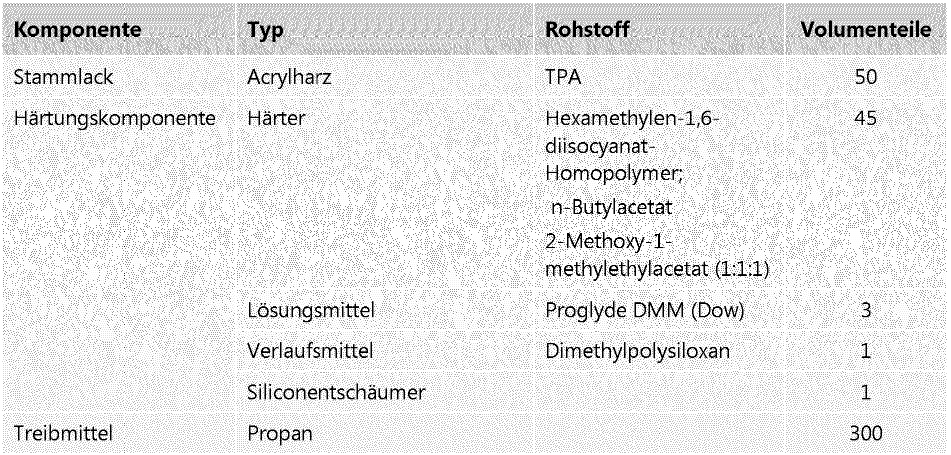

Das System hat eine durch die chemische Reaktion eine limitierte Topfzeit, es wird nach Lagerung reagieren und nach falls noch applizierbar auf eine glatte Oberfläche gesprüht, ergibt sich zeit-abhängig ein uneinheitlicher Film erhalten. Dieses Material wird nur über spezielle 2K Dosen (2Kammersysteme) anwendbar.

Alternative 1K Systeme auf Basis thermoplasticher Acrylate können nicht die notwendigen chemischen Eigenschaften (z. B. Markiererbeständikeiten oder Benzinfestigkeit ) erreichen.

## Patentansprüche

1. Lackzubereitung in Aerosolform, enthaltend oder bestehend aus
(a) mindestens einem SiH-funktionalisierten Polysiloxan,
(b) einem Lösemittel,
(c) einem Treibgas und gegebenenfalls
(d) einem Stammlack auf Basis eines selbstvernetzenden Polymers,

2. Lackzubereitung nach Anspruch 1, **dadurch gekennzeichnet, dass** die SiH-funktionellen Polysiloxane (b) der Formel (I) folgen 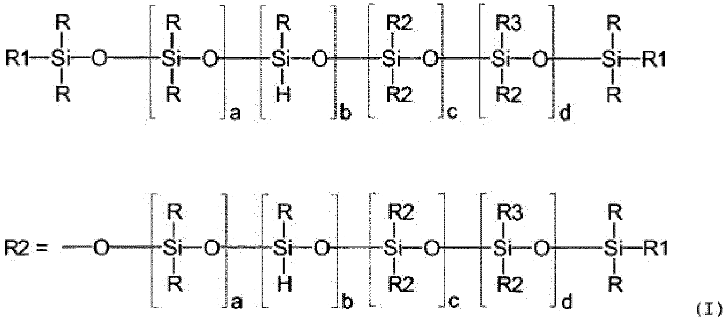 in welcher
a jeweils für 0 oder eine Zahl von 1 bis 500 steht;
b jeweils für 0 oder eine Zahl von 1 bis 60 steht;
c jeweils für eine Zahl von 1 bis 10 steht;
d jeweils für 0 oder eine Zahl von 1 bis 10 steht;
R jeweils für einen linearen oder verzweigten, aliphatischen, cycloaliphatischen oder aromatischen Kohlenwasserstoffrest mit 1 bis 20 Kohlenstoffatomen steht;
R1 jeweils für Wasserstoff oder R steht; und
R3 jeweils für R, Wasserstoff oder einen gegebenenfalls mit Heteroatomen substituierten Alkyl-, Alkenyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest, vorzugsweise für einen Methyl-, Chlorpropyl-, Vinyl- oder einen Methacryloxypropyl-Rest steht;
mit den Maßgaben, dass
(i) wenn b = 0 ist R1 = H ist
(ii) die mittlere Anzahl der T- und Q-Einheiten pro Molekül jeweils nicht größer als 20, ,
(iii) die mittlere Anzahl der D-Einheiten pro Molekül nicht größerer als 2000 und
(iv) die mittlere Anzahl der D^{H}-Einheiten pro Molekül nicht größer als 100ist.

3. Lackzubereitungen nach den Ansprühen 1 und/oder 2, **dadurch gekennzeichnet, dass** die mittlere Anzahl der T- und Q-Einheiten in Formel (I) pro Molekül jeweils nicht größer als 10, bevorzugt nicht größer als 5 ist.

4. Lackzubereitungen nach mindestens einem der Ansprüche 1 bis 3, **dadurch gekennzeichnet, dass**
- die mittlere Anzahl der D-Einheiten pro Molekül nicht größerer als 1000 und bevorzugt nicht größer als 500 und/oder
- die mittlere Anzahl der D^{H}-Einheiten pro Molekül nicht größer als 60 ist.

5. Lackzubereitungen nach mindestens einem der Ansprüche 1 bis 4, **dadurch gekennzeichnet, dass** die SiH-funktionellen Polysiloxane der Formel (II) folgen, 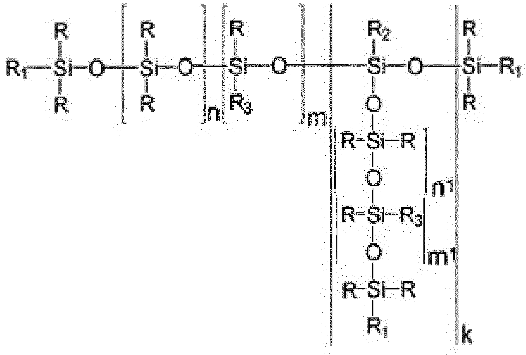 in welcher
n und n¹ unabhängig voneinander für 0 oder Zahlen von 10 bis 200 stehen;
(n+n¹) für eine Zahl kleiner 500 steht;
m und m¹ unabhängig voneinander für 0 oder Zahlen von 0,1 bis 30 stehen;
(m+m¹) für eine Zahl kleiner 60 steht;
k für eine Zahl von 1 bis 10 steht;
R jeweils für einen linearen oder verzweigten, aliphatischen, cycloaliphatischen oder aromatischen Kohlenwasserstoffrest mit 1 bis 20 Kohlenstoffatomen steht;
R₁ jeweils für R oder Wasserstoff steht;
R₂ jeweils für R, Wasserstoff oder einen gegebenenfalls mit Heteroatomen substituierten Alkyl-, Alkenyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest, vorzugsweise für einen Methyl-, Chlorpropyl-, Vinyl- oder einen Methacryloxypropyl-Rest steht;
R₃ jeweils für R oder Wasserstoff steht;
mit der Maßgabe, dass mindestens einer der Reste R₁, R₂ oder R₃ Wasserstoff darstellt.

6. Lackzubereitungen nach Anspruch 5, **dadurch gekennzeichnet, dass** die Reste R, R₁, R₂ und R₃ Methylreste darstellen, mit der Maßgabe, dass jedoch einer dieser Reste für Wasserstoff steht.

7. Lackzubereitungen nach mindestens einem der Ansprüche 1 bis 6, **dadurch gekennzeichnet, dass** sie weiterhin Hilfsstoffe enthält, die ausgewählt sind aus der Gruppe, die gebildet wird von Verlaufsmitteln, Silikonentschäumern und deren Mischungen.

8. Lackzubereitungen nach mindestens einem der Ansprüche 1 bis 7, **dadurch gekennzeichnet, dass** die Treibgase ausgewählt sind aus der Gruppe, die gebildet wird von Propan, Butan und Dimethylether.

9. Lackzubereitung nach mindestens einem der Ansprüche 1 bis 8, **dadurch gekennzeichnet, dass** der Stammlack (a) ein Polyurethan, ein Acrylharz oder eine Mischung von beiden darstellt.

10. Lackzubereitungen nach mindestens einem der Ansprüche 1 bis 9, **dadurch gekennzeichnet, dass** die Komponente (a) und (b) im Volumenverhältnis von etwa 1:1 bis etwa 1:10 eingesetzt werden.

11. Lackzubereitungen nach mindestens einem der Ansprüche 1 bis 10, **dadurch gekennzeichnet, dass** die Komponenten (a+b+c) und (d) im Volumenverhältnis von etwa 1:1 bis etwa 1:5 eingesetzt werden.

12. Verfahren zur Herstellung einer sprühfähigen 1K-Lackzubereitung nach Anspruch 1, umfassend die Schritte:
(a1) Bereitstellen der Lack und der Polysiloxankomponente;
(a2) Befüllen eines Druckcontainers mit Treibgas; und
(a3) Aufdrücken der Mischung aus Schritt (a1) auf den befüllten Druckcontainer aus Schritt (a2)
oder
(b1) Bereitstellen der Lack und der Polysiloxankomponente;
(b2) Befüllen eines Druckcontainers mit der Mischung aus Schritt (b1) ; und
(b3) Aufdrücken des Treibgases auf den befüllten Druckcontainer aus Schritt (b2).

13. Druckcontainer enthaltend die Lackzubereitung nach mindestens einem der Ansprüche 1 bis 11.

14. Druckcontainer nach Anspruch 13, **dadurch gekennzeichnet, dass** dieser bei 50 °C einen Druck von 1,1 bis 3,5 bar aufweist.

15. Verwendung der Lackzubereitung nach mindestens einem der Ansprüche 1 bis 11 als sprühfähiges 1K-System zum Auftrag auf feste Oberflächen.

## Claims

1. Lacquer preparation in aerosol form, comprising or consisting of
(a) at least one SiH-functionalized polysiloxane,
(b) a solvent,
(c) a propellant gas and optionally
(d) a base lacquer based on a self-crosslinking polymer,

2. Lacquer preparation according to claim 1, **characterized in that** the SiH-functionalized polysiloxanes (b) follow the formula (I) 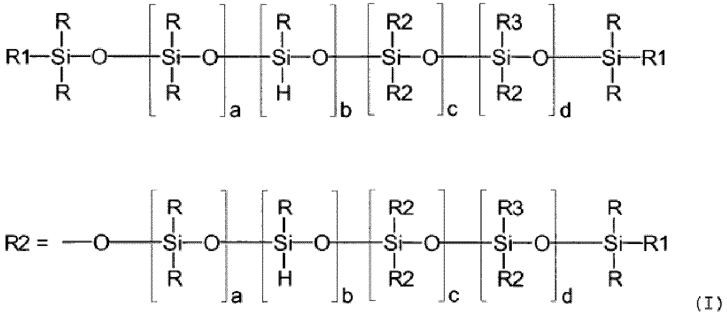 in which
a is in each case 0 or a number from 1 to 500;
b is in each case 0 or a number from 1 to 60;
c in each case represents a number from 1 to 10
d in each case represents 0 or a number from 1 to 10;
each R is a linear or branched, aliphatic, cycloaliphatic or aromatic hydrocarbon radical having 1 to 20 carbon atoms;
R1 is hydrogen or R; and
R3 in each case represents R, hydrogen or an alkyl, alkenyl, chloroalkyl, chloroaryl, fluoroalkyl, cyanoalkyl, acryloxyaryl, acryloxyalkyl, methacryloxyalkyl, methacryloxypropyl or vinyl radical, preferably a methyl, chloropropyl, vinyl or methacryloxypropyl radical, optionally substituted by heteroatoms;
with the provisos that
(i) when b = 0 R1 = H
(ii) the average number of T and Q units per molecule is not greater than 20, ,
(iii) the average number of D units per molecule is not greater than 2000, and
(iv) the average number of DH units per molecule is not greater than 100.

3. Lacquer preparation according to claims 1 and/or 2, **characterized in that** the average number of T and Q units in formula (I) per molecule is in each case not greater than 10, preferably not greater than 5.

4. Lacquer preparation according to at least one of claims 1 to 3, **characterized in that**
- the average number of D units per molecule is not greater than 1000 and preferably not greater than 500 and/or
- the average number of DH units per molecule is not greater than 60.

5. Lacquer preparation according to at least one of claims 1 to 4, **characterized in that** the SiH-functional polysiloxanes are of formula (II) 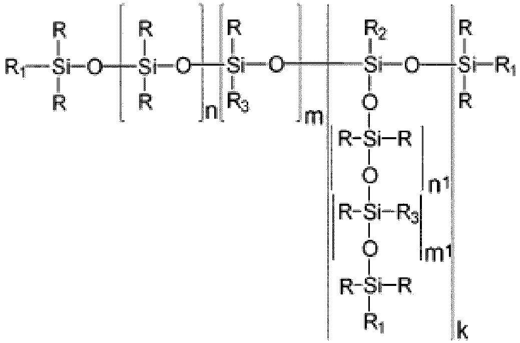 in which
n and n1 independently of one another represent 0 or numbers from 10 to 200;
(n+n1) is a number less than 500;
m and m1 independently of one another represent 0 or numbers from 0.1 to 30;
(m+m1) stands for a number smaller than 60;
k is a number from 1 to 10;
each R is a linear or branched, aliphatic, cycloaliphatic or aromatic hydrocarbon radical having from 1 to 20 carbon atoms;
R1 in each case represents R or hydrogen;
R2 in each case represents R, hydrogen or an alkyl, alkenyl, chloroalkyl, chloroaryl, fluoroalkyl, cyanoalkyl, acryloxyaryl, acryloxyalkyl, methacryloxyalkyl, methacryloxypropyl or vinyl radical, preferably a methyl, chloropropyl, vinyl or methacryloxypropyl radical, optionally substituted by heteroatoms;
R3 in each case represents R or hydrogen;
with the proviso that at least one of the radicals R1, R2 or R3 is hydrogen.

6. Lacquer preparation according to claim 5, **characterized in that** the radicals R, R1, R2 and R3 are methyl radicals, with the proviso that, however, one of these radicals is hydrogen.

7. Lacquer preparation according to at least one of claims 1 to 6, **characterized in that** they further contain auxiliaries selected from the group formed by flow agents, silicone defoamers and mixtures thereof.

8. Lacquer preparation according to at least one of claims 1 to 7, **characterized in that** the propellant gases are selected from the group formed by propane, butane and dimethyl ether.

9. Lacquer preparation according to at least one of claims 1 to 8, **characterized in that** the base lacquer (a) is a polyurethane, an acrylic resin or a mixture of both.

10. Lacquer preparation according to at least one of claims 1 to 9, **characterized in that** components (a) and (b) are used in a volume ratio of about 1:1 to about 1:10.

11. Lacquer preparation according to at least one of claims 1 to 10, **characterized in that** components (a+b+c) and (d) are used in a volume ratio of about 1:1 to about 1:5.

12. process for producing a sprayable 1-component lacquer preparation according to claim 1, comprising the steps of
(a1) providing the lacquer and the polysiloxane component;
(a2) filling a pressurized container with propellant gas; and
(a3) pressing the mixture from step (a1) onto the filled pressure container from step (a2)
or
(b1) providing the lacquer and the polysiloxane component;
(b2) filling a printing container with the mixture from step (b1); and
(b3) pressing the propellant gas onto the filled printing container from step (b2).

13. Pressure container containing the lacquer preparation according to at least one of claims 1 to 11.

14. Pressure container according to claim 13, **characterized in that** it has a pressure of 1.1 to 3.5 bar at 50 °C.

15. Use of the lacquer preparation according to at least one of claims 1 to 11 as a sprayable 1-component system for application to solid surfaces.

## Revendications

1. Préparation de laque sous forme d'aérosol, comprenant ou consistant en
(a) au moins un polysiloxane fonctionnalisé au SiH,
(b) un solvant
(c) un gaz propulseur et éventuellement
(d) une laque de base à base d'un polymère auto-réticulant,

2. Préparation de laque selon la revendication 1, **caractérisée par le fait que** les polysiloxanes (b) fonctionnalisés au SiH répondent à la formule (I) 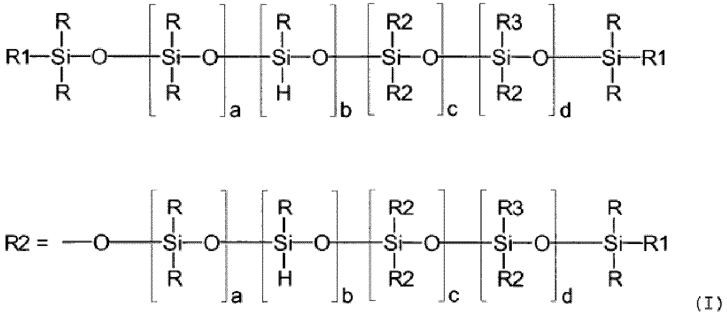 dans laquelle
a est dans chaque cas 0 ou un nombre de 1 à 500 ;
b représente dans chaque cas 0 ou un nombre de 1 à 60 ;
c représente dans chaque cas un nombre de 1 à 10
d représente dans chaque cas 0 ou un nombre compris entre 1 et 10 ;
chaque R est un radical hydrocarboné aliphatique, cycloaliphatique ou aromatique, linéaire ou ramifié, ayant de 1 à 20 atomes de carbone ;
R1 représente l'hydrogène ou R; et
R3 représente dans chaque cas R, l'hydrogène ou un radical alkyle, alcényle, chloroalkyle, chloroaryle, fluoroalkyle, cyanoalkyle, acryloxyaryle, acryloxyalkyle, méthacryloxyalkyle, méthacryloxypropyle ou vinyle, de préférence un radical méthyle, chloropropyle, vinyle ou méthacryloxypropyle, éventuellement substitué par des hétéroatomes ;
à condition que
(i) lorsque b = 0, R1 = H
(ii) le nombre moyen d'unités T et Q par molécule n'est pas supérieur à 20, ,
(iii) le nombre moyen d'unités D par molécule n'est pas supérieur à 2000, et
(iv) le nombre moyen d'unités DH par molécule n'est pas supérieur à 100.

3. Préparation de laque selon les revendications 1 et/ou 2, **caractérisée par le fait que** le nombre moyen d'unités T et Q de la formule (I) par molécule est dans chaque cas inférieur ou égal à 10, de préférence inférieur ou égal à 5.

4. Préparation de laque selon l'une au moins des revendications 1 à 3, **caractérisée par le fait que**
- le nombre moyen d'unités D par molécule est inférieur ou égal à 1000 et de préférence inférieur ou égal à 500 et/ou
- le nombre moyen d'unités DH par molécule est inférieur ou égal à 60.

5. Préparation de laque selon l'une au moins des revendications 1 à 4, **caractérisée par le fait que** les polysiloxanes à fonction SiH sont de formule (II) 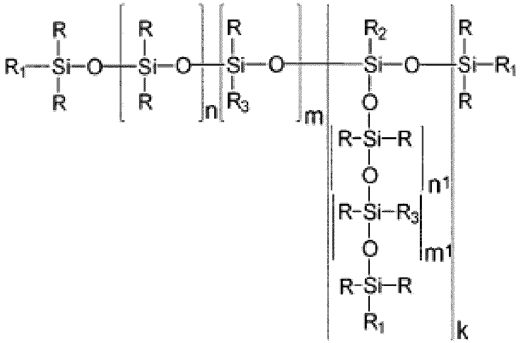 dans laquelle
n et n1 représentent indépendamment l'un de l'autre 0 ou des nombres compris entre 10 et 200 ;
(n+n1) est un nombre inférieur à 500 ;
m et m1 représentent indépendamment l'un de l'autre 0 ou des nombres compris entre 0,1 et 30 ;
(m+m1) représente un nombre inférieur à 60 ;
k est un nombre compris entre 1 et 10 ;
chaque R est un radical hydrocarboné aliphatique, cycloaliphatique ou aromatique, linéaire ou ramifié, ayant de 1 à 20 atomes de carbone ;
R1 représente dans chaque cas R ou de l'hydrogène ;
R2 représente dans chaque cas R, l'hydrogène ou un radical alkyle, alcényle, chloroalkyle, chloroaryle, fluoroalkyle, cyanoalkyle, acryloxyaryle, acryloxyalkyle, méthacryloxyalkyle, méthacryloxypropyle ou vinyle, de préférence un radical méthyle, chloropropyle, vinyle ou méthacryloxypropyle, éventuellement substitué par des hétéroatomes ;
R3 représente dans chaque cas R ou l'hydrogène ;
à condition qu'au moins un des radicaux R1, R2 ou R3 soit de l'hydrogène.

6. Préparation de laque selon la revendication 5, **caractérisée par le fait que** les radicaux R, R1, R2 et R3 sont des radicaux méthyle, à condition toutefois que l'un de ces radicaux soit de l'hydrogène.

7. Préparation de laque selon l'une au moins des revendications 1 à 6, **caractérisée en ce qu'**elle contient en outre des auxiliaires choisis dans le groupe formé par les agents d'écoulement, les antimousses silicones et leurs mélanges.

8. Préparation de laque selon l'une au moins des revendications 1 à 7, **caractérisée par le fait que** les gaz propulseurs sont choisis dans le groupe formé par le propane, le butane et l'éther diméthylique.

9. Préparation de laque selon l'une au moins des revendications 1 à 8, **caractérisée par le fait que** la laque de base (a) est un polyuréthane, une résine acrylique ou un mélange des deux.

10. Préparation de laque selon l'une au moins des revendications 1 à 9, **caractérisée par le fait que** les composants (a) et (b) sont utilisés dans un rapport de volume d'environ 1:1 à environ 1:10.

11. Préparation de laque selon l'une au moins des revendications 1 à 10, **caractérisée par le fait que** les composants (a+b+c) et (d) sont utilisés dans un rapport de volume d'environ 1:1 à environ 1:5.

12. Procédé de fabrication d'une préparation de laque à un composant pulvérisable selon la revendication 1, comprenant les étapes suivantes
(a1) fournir la laque et le composant polysiloxane ;
(a2) r emplir un récipient pressurisé avec un gaz propulseur ; et
(a3) presser le mélange de l'étape (a1) sur le récipient pressurisé rempli de l'étape (a2) ou
(b1) fournir la laque et le composant polysiloxane ;
(b2) remplir un récipient d'impression avec le mélange de l'étape (b1) ; et
(b3) presser le gaz propulseur sur le récipient d'impression rempli à l'étape (b2).

13. Réservoir sous pression contenant la préparation de laque selon au moins l'une des revendications 1 à 11.

14. Réservoir sous pression selon la revendication 13, **caractérisé en ce qu'**il a une pression de 1,1 à 3,5 bars à 50 °C.

15. Utilisation de la préparation de laque selon l'une au moins des revendications 1 à 11 comme système pulvérisable à 1 composant pour application sur des surfaces solides.
